# EUROPÄISCHE PATENTANMELDUNG

(11) **EP 1 270 510 A2**
(43) Veröffentlichungstag der Anmeldung: **02.01.2003**
(21) Anmeldenummer: 02010382.6
(22) Anmeldetag: 08.05.2002
(51) Int. Cl.: C01B 3/58, H01M 8/06

(54) **Verfahren zur Verbesserung des Kaltstartverhaltens von selektiven CO-Oxidationskatalysatoren**

(30) Priorität: 20.06.2001 DE 10129658
(71) Anmelder: Ballard Power Systems AG, 73230 Kirchheim / Teck-Nabern (DE)
(72) Erfinder: Saling, Carlo, 73230 Dettingen/Teck (DE); Wolfsteiner, Matthias, 73230 Kirchheim/Teck (DE)
(74) Vertreter: Beyer, Andreas, Dr.

(57) **Zusammenfassung**

Das Verfahren dient zur Verbesserung des Kaltstartverhaltens von selektiven CO-Oxidationskatalysatoren in Gasreinigungsstufen eines Gaserzeugungssystems zur Herstellung eines wasserstoffhaltigen Reformatgases, insbesondere für ein Brennstoffzellensystem. Nach dem Abstellen des Gaserzeugungssystems wird ein Medienstrom über den selektiven CO-Oxidationskatalysator geführt, um startverzögernde Bestandteile auszuspülen.

## Beschreibung

Die Erfindung betrifft ein Verfahren zur Verbesserung des Kaltstartverhaltens von selektiven CO-Oxidationskatalysatoren nach der im Oberbegriff von Anspruch 1 näher definierten Art.

Nach dem Betrieb eines Gaserzeugungssystems, beispielsweise in einem Kraftfahrzeug mit integriertem Brennstoffzellensystem, kondensieren Wasser und Brennstoff aus dem Refomatgas des Gaserzeugungssystems auf der Oberfläche des CO-Oxidationskatalysators aufgrund der Abkühlung des Reformatgases und des Katalysators aus. Des weiteren kommt es nach dem Abstellen des Gaserzeugungssystems zumindest teilweise zu einer Belegung des selektiven CO-Oxidationskatalysators mit Kohlenmonoxid (CO) durch sogenannte Chemisorption. Dadurch werden Poren und aktive Zentren auf der Oberfläche des, beispielsweise aus einem Edelmetall, wie Platin, Ruthenium oder Palladium, ausgebildeten selektiven CO-Oxidationskatalysators belegt. Die Folge ist nun, dass je nach Bedeckungsgrad der Oberfläche des Katalysators mit diesen Bestandteilen eine Anhebung der für die Zündung bzw. Aktivierung des Katalysators erforderlichen Temperatur erfolgt, so dass bei einem Wiederstart, der nach geraumer Zeit nach Abstellen erfolgt, also in diesem Fall einem Kaltstart, die für das Starten des Katalysators erforderliche Startzeit verlängert wird. In sehr extremen Fällen kann sogar das Anspringen der Reaktion auf dem Katalysator verhindert werden, insbesondere dann, wenn bei sehr tiefen Temperaturen eine Vereisung des Katalysators mit der in ihm auskondensierten Feuchtigkeit erfolgt.

Die Aufgabe der Erfindung ist es daher, ein Verfahren zu schaffen, mit dem die Belegung der Oberfläche eines selektiven CO-Oxidationskatalysators mit startverzögernden Bestandteilen nach dem Abschalten des Gaserzeugungssystems zuverlässig vermindert oder ganz vermieden werden kann.

Erfindungsgemäß wird diese Aufgabe durch das Verfahren mit den im kennzeichnenden Teil von Anspruch 1 genannten Merkmalen gelöst.

Durch das erfindungsgemäße Spülen des Katalysators mit einem Medienstrom nach dem Abstellen des Gaserzeugungssystems kann erreicht werden, dass die startverzögernden Bestandteile aus dem Bereich des selektiven CO-Oxidationskatalysators entfernt bzw. ausgespült werden. Bei diesen startverzögernden Bestandteilen handelt es sich dabei in erster Linie um auskondensierende Bestandteile des Reformatgasstroms, insbesondere Wasser und gegebenenfalls Reste des Ausgangsstoffs, wie beispielsweise Methanol oder dergleichen. Daneben spielt auch Kohlenmonoxid (CO), welches im Bereich der Oberfläche des selektiven CO-Oxidationskatalysators chemisorbiert, eine startverzögernde Rolle.

Durch das erfindungsgemäße Ausspülen dieser Stoffe aus dem Bereich des Katalysators kann nun erreicht werden, dass bei einem geraume Zeit nach dem Abstellen erfolgenden Wiederstart, welcher im allgemeinen ein Kaltstart ist, bei dem Temperaturen im Bereich des Katalysators von ca. -25 °C bis +25 °C zu erwarten sind, entscheidend verbessert werden kann. Die entscheidende Verbesserung zielt dabei insbesondere auf die Zeitspanne, welche erforderlich ist, bis der Katalysator seinen störungsfreien bestimmungsgemäßen Betrieb aufzunehmen vermag, so dass die CO-Konzentration in dem Reformatgasstrom nach dem Katalysator in einen Bereich gesenkt werden kann, welche für eine Weiterverwendung des Reformatgasstromes, beispielsweise in einer Brennstoffzelle, unbedenklich ist. Insbesondere bei mobilen Anwendungen erschließt sich hier ein gravierender Vorteil, da lange Aufwärmzeiten für den Betreiber einer solchen Anlage, beispielsweise in einem Kraftfahrzeug, einen unzumutbaren Nachteil darstellen.

In einer besonders günstigen Ausführungsform des erfindungsgemäßen Verfahrens wird als Medienstrom ein sauerstoffhaltiger Medienstrom, beispielsweise Luft, eingesetzt.

Dadurch ergeben sich weitere Vorteile. Durch das Spülen mit einem sauerstoffhaltigen Medienstrom, wie beispielsweise Luft, wird neben dem Ausspülen der Feuchtigkeit und der chemisorbierten Bestandteile aus dem Bereich der Katalysatoroberfläche für eine Belegung der Katalysatoroberfläche mit Sauerstoff gesorgt. Untersuchungen und Messungen haben nämlich gezeigt, dass ein entsprechender Katalysator, beispielsweise ein Katalysator der Platin-Gruppe, bei einer entsprechenden Belegung mit Sauerstoff eine zusätzliche Verbesserung seiner Kaltstarteigenschaften erfährt.

Durch diese Ausgestaltung des erfindungsgemäßen Verfahrens können außerdem vorrichtungstechnische Vorteile erzielt werden, da während des normalen, bestimmungsgemäßen Betriebs eines Gaserzeugungssystems in dem Bereich des selektiv wirksamen CO-Oxidationskatalysators ohnehin sauerstoffhaltige Medien gefördert werden, so dass hier keine zusätzlichen Kompressoren, Leitungselemente oder dergleichen notwendig werden, um das erfindungsgemäße Verfahren zu realisieren.

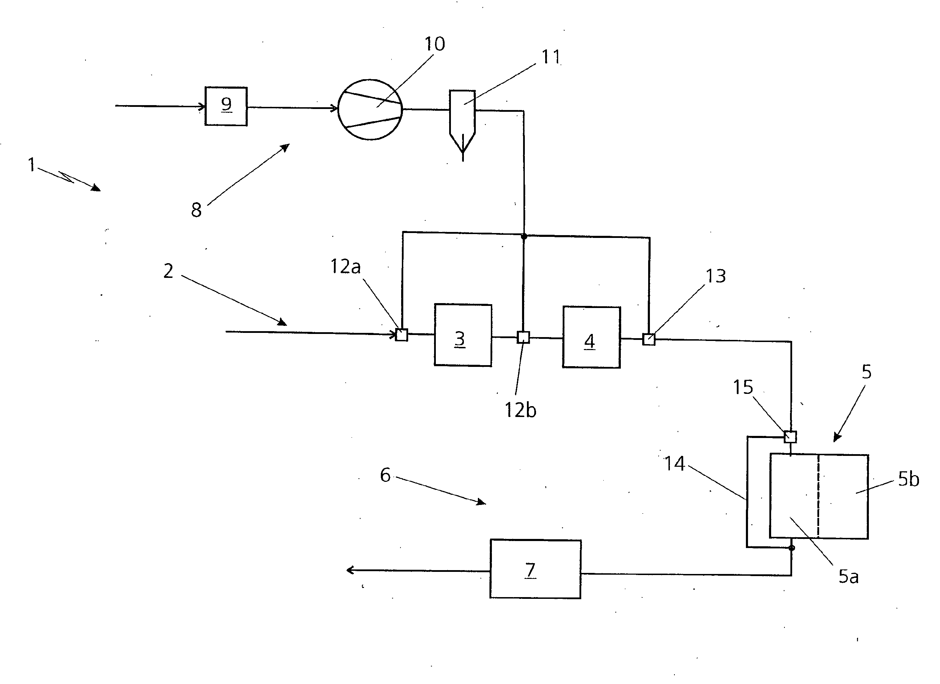

Weitere vorteilhafte Ausgestaltungen der Erfindung ergeben sich aus den restlichen Unteransprüchen und dem anhand der Zeichnung nachfolgend dargestellten Ausführungsbeispiel.

Die einzige beigefügte Figur zeigt einen Ausschnitt aus einem Gaserzeugungssystem 1, wie es bei Brennstoffzellensystemen, welche auf der Basis von flüssigen Kohlenwasserstoffen als Energiespeicher betrieben werden, bekannt und üblich ist.

Über einen Reformatstrang 2 gelangt ein wasserstoffhaltiges Reformatgas von zu dem Gaserzeugungssystem 1 gehörenden, jedoch nicht dargestellten partiellen Oxidationsstufen, Reformern oder dergleichen in den dargestellten Bereich des Gaserzeugungssystems 1. Der Reformatstrang 2 führt dann über zwei selektive Oxidationsstufen 3, 4 zu einer Brennstoffzelle 5 mit einem Anodenraum 5a und einem durch eine protonenleitende Membrane in an sich bekannter Weise davon getrennten Kathodenraum 5b. Von der Brennstoffzelle 5 führt ein Abgasstrang 6 über einen katalytischen Brenner 7 aus dem Gaserzeugungssystem 1. Der Abgasstrang 6 kann dabei weitere an sich bekannte Mittel zur Reinigung, Aufbereitung des Abgases, Rückgewinnung von Druck oder dergleichen beinhalten, die für die Erfindung nicht interessant und deshalb nicht dargestellt sind.

Die beiden selektiven Oxidationsstufen 3, 4, im hier dargestellten Ausführungsbeispiel sollen dies zwei adiabate selektive Oxidationsstufen sein, sind in an sich bekannter Weise aufgebaut und verfügen über einen selektiv wirksamen Katalysator zur Oxidation von Kohlenmonoxid (CO). Der Katalysator kann über Schüttungen, Beschichtungen oder dergleichen in an sich bekannter Art in die selektiven Oxidationsstufen 3, 4 eingebracht sein.

Außerdem ist in der einzigen beigefügten Figur ein Luftstrang 8 zu erkennen, welcher Umgebungsluft über einen Filter 9 und eine Kompressionseinrichtung 10 in den Bereich des Reformatstrangs 2 fördert. Der Luftstrang 8 kann außerdem einen Kondensat- bzw. Feuchtigkeitsabscheider 11 aufweisen, da eine unkontrollierte Zufuhr von Feuchtigkeit in den Reformatgasstrom des Reformatstrangs 2 häufig unerwünscht ist.

Die Verbindung zwischen dem Luftstrang 8 und dem Reformatstrang 2 erfolgt über Ventileinrichtungen 12a, 12b, welche beispielsweise als Ventile oder, wie in dem hier vorliegenden Fall, als Laval-Düsen ausgebildet sein können. Außerdem weist der Luftstrang 8 eine weitere Verbindung mit dem Reformatstrang 2 auf, welche über ein sogenanntes "airbleed"-Ventil 13 erfolgt.

Um die Oberflächen des selektiven CO-Oxidationskatalysators im Bereich der selektiven Oxidationssstufen 3, 4 nach dem Abstellen des Gaserzeugungssystems ent-sprechend spülen zu können, gibt es mehrere Möglichkeiten:
Erstens kann nach einem "drucklos" Schalten des Reformatstrangs 2 über den Abgasstrang 6 der in dem Reformatstrang 2 vorliegende Druck zusammen mit Restinhalt an Reformatgas abgebaut werden. Danach können die beiden beispielsweise als Laval-Düsen 12a, 12b ausgebildeten Dosierventile geöffnet werden, so dass über die Kompressionseinrichtung 10 Luft von dem Luftstrang 8 in den Reformatstrang 2, insbesondere in den Bereich der beiden selektiven Oxidationsstufen 3, 4, gefördert werden kann. Die startverzögernden Bestandteile, welche sich im Bereich der selektiven Oxidatiosnsstufen 3, 4 abgesetzt haben, also insbesondere Feuchtigkeit und chemisorbiertes CO, werden über diesen Luftstrom in den Bereich des Abgasstrangs 6 ausgespült.

Zweitens besteht auch die Möglichkeit, dass zusammen mit dem Gaserzeugungssystem auch die Kompressionseinrichtung in dem Luftstrang abgeschaltet wird. Bei noch verschlossenen Laval-Düsen 12a, 12b wird dann der Reformatstrang 2 in der oben bereits beschriebenen Weise entleert. Zwischen der Kompressionseinrichtung 10 und den Laval-Düsen 12a, 12b befindet sich Luft in den Leitungselementen, welche ein weitaus höheres Druckniveau haben als der Reformatstrang 2 zu diesem Zeitpunkt. Durch das Öffnen der beiden Laval-Düsen 12a, 12b baut sich dieser Druck mit einem Stoffstrom der in dem Bereich zwischen Kompressionseinrichtung 10 und Laval-Düsen 12a, 12b zwischengespeicherten Luft ab, wobei die Luft durch die beiden selektiven Oxidationsstufen 3, 4 in den Bereich des Abgasstrangs 6 abströmt.

Beide Möglichkeiten können bei unverändertem Aufbau der Vorrichtung, also ohne zusätzliche Bauelemente, Leitungselemente oder dergleichen, sicherstellen, dass eine Spülung der beiden selektiven Oxidationsstufen 3, 4 mit Luft erfolgt, so dass startverzögernde Bestandteile bereits beim Abstellen des Gaserzeugungssystems 1 aus den selektiven Oxidationsstufen 9, 4 ausgespült werden.

Der erforderliche Durchsatz an Luft und dessen Enthalpiegehalt ist dabei so gering, dass dieser problemlos über den Anodenraum 5a der Brennstoffzelle 5 geleitet werden könnte. Häufig ist jedoch für die Entleerung des Reformatstrangs 2 ohnehin ein Bypass 14 mit einer entsprechenden Ventileinrichtung 15 vorhanden, so dass die Spülung der selektiven Oxidationsstufen 3, 4 auch problemlos über diesen Bypass 14 vorgenommen werden kann.

Das air-bleed-Ventil 13 ist für die vorliegende Erfindung nicht weiter von Bedeutung, so dass hier lediglich erwähnt werden soll, dass dieses während der Spülung der selektiven Oxidationsstufen 3, 4 verschlossen bleiben sollte, um Rückströmungen der ausgespülten Stoffe in den Luftstrang 8 zu vermeiden.

Die Spülung der selektiven Oxidationsstufen 3, 4 über die von der Kompressionseinrichtung 10 geförderte Luft oder in dem Luftstrang 8 zwischengespeicherte Luft sollte dabei bei einer Temperatur erfolgen, bei der die in den selektiven Oxidationsstufen 3, 4 vorliegenden dampfförmigen Bestandteile an Wasser, Brennstoffresten oder dergleichen noch nicht auskondensiert sind, so dass diese sehr einfach in ihrer gasförmigen bzw. dampfförmigen Phase ausgespült werden können. Daher bietet es sich an, das Spülen unmittelbar nach dem Abstellen des Gaserzeugungssystems 1, also vor einem endgültigen Abkühlen der selektiven Oxidationsstufen 3, 4, durchzuführen.

Zusätzlich kommt es bei der Spülung mit dem sauerstoffhaitigen Medium Luft zu einer Aktivierung des Katalysators mit Sauerstoff, welche wiederum eine Verbesserung des Kaltstartverhaltens und eine Verkürzung der Kaltstartzeit der entsprechenden Katalysatoren bewirken kann.

Um nicht unnötige Feuchtigkeit in die selektiven Oxidationsstufen 3, 4 einzubringen, ist für den hier vorgestellten Anwendungsfall der Feuchtigkeitsabscheider 11 praktisch unumgänglich. Sollte dieser also nicht ohnehin vorhanden sein, so wird dies die einzige vorrichtungsmäßige Komponente sein, welche zur Durchführung des Verfahrens neben dem bereits bestehenden Aufbau des Gaserzeugungssystems 1 gegebenenfalls zusätzlich erforderlich wird.

## Patentansprüche

1. Verfahren zur Verbesserung des Kaltstartverhaltens von selektiven CO-Oxidationskatalysatoren in Gasreinigungsstufen eines Gaserzeugungssystems zur Herstellung eines wasserstoffhaltigen Reformatgases, insbesondere für ein Brennstoffzellensystem,
**dadurch gekennzeichnet, dass**
nach dem Abschalten des Gaserzeugungssystems (1) ein Medienstrom über den selektiven CO-Oxidationskatalysator (selektive Oxidationsstufen 3,4) geführt wird, um startverzögernde Bestandteile auszuspülen.

2. Verfahren nach Anspruch 1,
**dadurch gekennzeichnet, dass**
als Medienstrom ein sauerstoffhaltiger Medienstrom genutzt wird.

3. Verfahren nach Anspruch 1 oder 2,
**dadurch gekennzeichnet, dass**
der Medienstrom vor einem endgültigen Abkühlen des selektiven CO-Oxidationskatalysators (selektive Oxidationsstufen 3,4) über diesen geführt wird.

4. Verfahren nach Anspruch 1, 2 oder 3,
**dadurch gekennzeichnet, dass**
zuerst ein Reformatstrang (2), welcher den selektiven CO-Oxidationskatalysator (selektive Oxidationsstufen 3,4) beinhaltet, drucklos geschaltet wird, wonach eine unter Druck stehende Medienmenge, welche zwischen einer Kompressionseinrichtung (10) und Ventileinrichtungen, Düsen (12a,12b) oder dergleichen, zur Zufuhr des Mediums in den Bereich des selektiven CO-Oxidationskatalysators (selektive Oxidationsstufen 3,4) gespeichert ist, über diesen abgelassen wird.

5. Verfahren nach Anspruch 1, 2 oder 3,
**dadurch gekennzeichnet, dass**
zuerst ein Reformatstrang (2), welcher den selektiven CO-Oxidationskatalysator (selektive Oxidationsstufen 3,4) beinhaltet, drucklos geschaltet wird, wonach von einer Kompressionseinrichtung (10) der Medienstrom bei geöffneten Ventileinrichtungen, Düsen (12a,12b) oder dergleichen über den selektiven CO-Oxidationskatalysator (selektive Oxidationsstufen 3,4) gefördert wird.

6. Verfahren nach Anspruch 4 oder 5,
**dadurch gekennzeichnet, dass**
als Kompressionseinrichtung (10) und Ventileinrichtung, Düsen (12a,12b) oder dergleichen diejenigen Einrichtungen verwendet werden, die im bestimmungsgemäßen Betrieb des Gaserzeugungssystems (1) zur Zufuhr von sauerstoffhaitigen Medium zu dem selektiven CO-Oxidationskatalysator (selektive Oxidationsstufen 3,4) vorgesehen sind.

7. Verfahren nach einem der Ansprüche 1 bis 6,
**dadurch gekennzeichnet, dass**
der Medienstrom, nachdem er über den selektiven CO-Oxidationskatalysator (selektive Oxidationsstufen 3,4) geführt worden ist, über einen Bypass (14) um einen Anodenraum (5a) einer Brennstoffzelle (5) geleitet wird.
